# EUROPÄISCHE PATENTSCHRIFT

(11) **EP 1 737 695 B1**
(45) Veröffentlichungstag und Bekanntmachung des Hinweises auf die Patenterteilung: **23.03.2011**
(21) Anmeldenummer: 05743062.1
(22) Anmeldetag: 18.04.2005
(51) Int. Cl.: B60K 31/00

(54) **ASSISTENZSYSTEM FÜR KRAFTFAHRZEUGE**
ASSISTANCE SYSTEM FOR MOTOR VEHICLES
SYSTEME D'ASSISTANCE POUR VEHICULES

(30) Priorität: 21.04.2004 DE 102004019337
(43) Veröffentlichungstag der Anmeldung: 03.01.2007
(73) Patentinhaber: Continental Automotive GmbH, 30165 Hannover (DE)
(72) Erfinder: ERTL, Ludwig, 93093 Donaustauf (DE); KÖHLER, Thorsten, 88131 Lindau (DE); RUEHL, Hans-Wilhelm, 35606 Solms (DE); ZITTLAU, Dirk, 92348 Stöckelsberg (DE)
(86) Internationale Anmeldenummer: PCT/EP2005/051695
(87) Internationale Veröffentlichungsnummer: WO 2005/102765

(56) Entgegenhaltungen:
- EP-A- 0 989 012
- EP-A- 1 052 610
- EP-A- 1 074 421
- EP-A- 1 096 457
- EP-A- 1 193 583
- EP-A- 1 225 424
- EP-A2- 1 065 520
- DE-A1- 10 045 944
- DE-A1- 19 938 691
- US-A1- 2003 204 299

## Beschreibung

Die Erfindung betrifft einen Überholassistenten für Kraftfahrzeuge.

Intelligente Assistenzsysteme werden in modernen Kraftfahrzeugen der Zukunft eine immer wichtigere Stellung einnehmen. Derzeit sind einzelne Systeme für Fahrer und/oder Fahrzeug erhältlich, insbesondere:
- Navigationssysteme;
- Systeme wie ABS (Anti-Blockier-System), ESP (Electronic Stability Program) oder ASR (Anti-Schlupf-Regelung), die automatisch und ohne Eingriff des Fahrers agieren; sowie
- Cruise Controls (CC) bzw. ACC (Adaptive Cruise Controls) und LDW (Lane Depature Warning).

Die bekannten Assistenzsysteme zeichnen sich dadurch aus, dass sie oberhalb ihrer Sensorinformation keine höherwertigen Informationen untereinander austauschen. Beispielsweise nutzt das Navigationssystem die Raddrehzahlen wie auch ABS und ESP, weiß aber nicht, ob ABS oder ESP gerade regeln.

Um den vollen Umfang der Möglichkeiten der Fahrerassistenzsysteme in ihrer Gesamtheit zu nutzen, ist es erforderlich die Informationen auf einer höheren Systemebene miteinander zu verknüpfen.

Die EP 10655,2 0 A2 zeigt Verfahren zur Fahrzeugkontrolle und - warnung gemäß dem Oberbegriff des Anspruchs 1 mit einem Abstamdsregelassistenten (ACC) für Kraftfahrzeuge. Eine Steuereinheit verknüpft Daten eines Navigationssystems mit Daten von Umfeld- und Fahrzeugsensoren um eine Warnung bei einer Kollisionsgefahr auszugeben.

Aufgabe der vorliegenden Erfindung ist, ein verbessertes Assistenzsystem für Kraftfahrzeuge bereitzustellen, das vorbenannte Nachteile vermeidet.

Diese Aufgabe wird erfindungsgemäß durch die Merkmale der unabhängigen Patentansprüche gelöst.

Vorteilhafte Ausgestaltungen und Weiterbildungen, welche einzeln oder in Kombination miteinander eingesetzt werden können, sind Gegenstand der abhängigen Ansprüche.

Erfindungsgemäß umfasst ein Überholassistent für Kraftfahrzeuge wenigstens eine Steuereinheit, welche bei einer durch die Steuereinheit erkannter Vorgabe des Fahrzeugführers zumindest je ein Datum
- eines Navigationssystems;
- einer Fahrumgebungserfassung
- einer Erfassungsvorrichtung für die aktuelle Fahrzeugdynamik und/oder der Vorgaben des Fahrzeugführers miteinander verknüpft. Bei Überfahren der Mittellinie oder Setzen des Blinkers durch einen Fahrer wird eine Warnung ausgegeben, wenn der Streckenabschnitt laut Daten des Navigationssystems für einen Überholvorgang nicht geeignet ist.

Bevorzugt zählen zu den Vorgaben des Fahrzeugführers: das eingegebene Ziel in einem Navigationssystem; der gewählte Gang des Getriebes; die Gaspedalstellung; die Stellung der übrigen Pedale; der eingeschlagene Lenkwinkel; die gesetzte oder nicht gesetzte Blinkerstellung; die Lichteinstellungen; die Einstellungen des Cruise Controls (CC) bzw. des ACC; und/oder dergleichen mehr.

Zu globalen Daten zählen beispielsweise: der globale Verlauf der vor dem Fahrzeug liegenden Fahrbahn; dem Typ der Fahrbahn wie Autobahn, Landstrasse, etc.; der einer Fahrbahnbegrenzung; der Zahl der Fahrspuren; Brücken; Tunnel; Verkehrszeichen; und/oder dergleichen mehr. Erfindungsgemäß bevorzugt werden die globalen Daten auf Basis aufbereiteter Kartendaten sowie einer Positionsbestimmung des Kraftfahrzeuges z.B. mittels GPS, Odometrie, UMTS und/oder dergleichen in einer Recheneinheit generiert, welche Teil der Steuereinheit oder auch von dieser unabhängig sein kann.

Zu lokalen Daten zählen beispielsweise Daten wie: der lokale Verlauf der vor dem Fahrzeug liegenden Fahrbahn; der eigenen Fahrspur; der Krümmung der Fahrbahn; dem Typ der Fahrbahnmarkierung; weitere Verkehrsteilnehmer nebst deren relative Positionen, Geschwindigkeiten, Beschleunigungen u.ä. in Bezug zum eigenen Fahrzeug; Randbebauungen wie Leitplanken, Verkehrszeichen, Tunnel, Abbiegepfeile, Zebrastreifen, Parkbuchten; der Position des eigenen Fahrzeug auf der Fahrspur, der Gierwinkel, die Gierwinkeländerung, der Nickwinkel, die Nickwinkeländerung, der Rollwinkel und die Rollwinkeländerung des Fahrzeugs relativ zur Fahrspur bzw. zur Fahrspurebene. Erfindungsgemäß bevorzugt werden die lokalen Daten mittels sog. Umfeldsensoren generiert wie insb. den Frontbereich, ggf. auch die Seitenbereiche und die Rückfront, des Kraftfahrzeuges erfassende Kamerasysteme; ACC Radar; 24 GHz- oder 77 GHz-Radarsensoren, LIDAR-Sensoren; Ultraschallsensoren; und/oder dergleichen mehr.

Zu internen Daten zählen beispielsweise Daten wie: Raddrehzahl; Gierwinkel; Motordrehzahl; Gang des Getriebes; Temperatur einzelner Aggregate; momentaner Treibstoffverbrauch; Reifendruck, Reifentyp; Reifenalter; und/oder dergleichen mehr. Erfindungsgemäß bevorzugt werden die internen Daten durch interne Sensoren im Kraftfahrzeug bereitgestellt wie Raddrehzahlsensoren; Gierwinkelsensoren; Motorsteuerung; Tankanzeiger; Reifendruckmesser; Regensensor; und/oder dergleichen mehr.

Erfindungsgemäß bevorzugt, ist die Warnung ein akustischer, visueller und/oder haptischer Warnhinweis.

Alternativ oder kumulativ hierzu greift die Steuereinheit selbständig in definierte Systeme wie Bremsen, Lenkung, etc. des Kraftfahrzeuges ein.

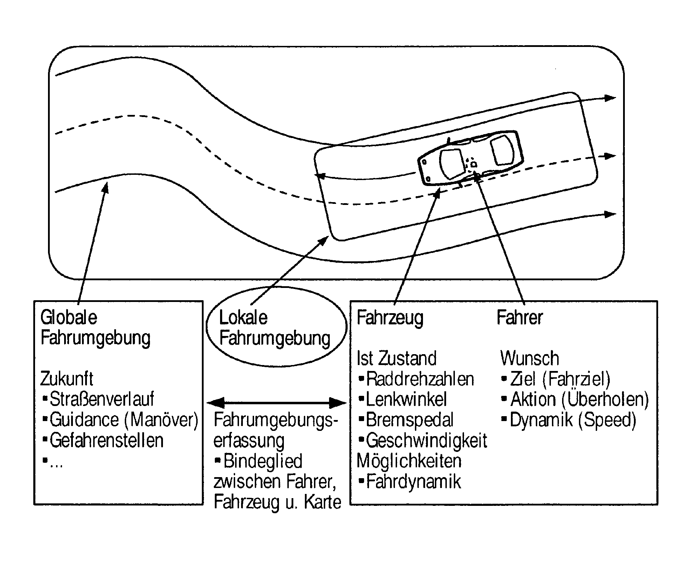

Zusätzliche Einzelheiten und weitere Vorteile der Erfindung werden nachfolgend an Hand bevorzugter Ausführungsbeispiele sowie der beigefügten Zeichnung beschrieben.

Die einzige Figur zeigt schematisch drei Datengruppen: globale Daten (globale Fahrumgebung), lokale Daten (lokale Fahrumgebung), interne Daten (Fahrzeug) sowie den Fahrzeugführer mit seinen Absichten bzw. Wünschen, was letztlich einer vierten Datengruppe gleich kommt.

Die vorliegende Erfindung beruht auf dem Gedanken, die globale Information immer mit der lokalen Umfelderfassung zu verifizieren und zusätzlich die genaue Lage und Fahrdynamik des eigenen Kraftfahrzeugs relativ zur globalen Welt mit den lokalen und internen Informationen zu vergleichen. Unter anderem kann dadurch in vorteilhafter Weise eine Redundanz erreicht werden, die insbesondere für Sicherheitsrelevante Anwendungen entscheidend ist.

Die Erfindung sei im Folgenden anhand von Ausführungsbeispielen des Überholassistenten verdeutlicht.

Ein erfindungsgemäßer Überholassistent ist vorzugsweise charakterisiert durch:
- ein Navigationssystem oder einer anderen Verknüpfung von Karte und Position auf der Karte;
- eine Fahrumgebungserfassung, welche die Fahrspur, ein zu überholendes Fahrzeug, optional den Gegenverkehr und/oder Verkehrsschilder erfasst;
- die aktuelle Fahrzeugdynamik; sowie
- den Fahrzeugführer, der andere Verkehrsteilnehmer überholen will, verdeutlicht z.B. durch Blinkersetzen, Lenkwinkel, Pedalstellungen, etc.

In einer ersten Ausführung des Überholassistenten erkennt vorzugsweise ein Kamerasystem ein (in geringem Abstand) vorausfahrendes Fahrzeug und das Überfahren der Mittellinie oder der Fahrer setzt den Blinker, wodurch dem Überholassistenten der Wunsch des Fahrers einen Überholvorgang einzuleiten bekannt wird. In diesem Fall gibt das System eine Warnung insbesondere dann aus, wenn der Streckenabschnitt nach den Kartendaten für einen Überholvorgang nicht geeignet ist, beispielsweise im Fall zu kurzer gerader oder uneinsehbarer Streckenabschnitte oder naher Kreuzungen oder Einmündungen, etc.

In einer Weiterbildung berücksichtigt der Überholassistent die Geschwindigkeit des eigenen Fahrzeugs, sowie optional die von einer Umfeldsensorik erfasste Geschwindigkeit des zu überholenden Fahrzeugs, um ggf. eine Warnung zu generieren.

In einer weiteren Ausbildung teilt der Überholassistent dem Fahrer nach einer Warnung mit, in welcher Entfernung der nächste geeignete Streckenabschnitt für ein Überholmanöver zu erwarten ist.

In einer weiteren Ausführung hat der Überholassistent entweder aufgrund der Navigationsdaten oder Aufgrund der Erkennung von Gegenverkehr vorteilhaft Kenntnis darüber, ob auf dem Streckenabschnitt mit Gegenverkehr zu rechnen ist (nicht z.B. auf Autobahnen). Warnungen würden dann nur auf einspurigen Fahrbahnen generiert werden oder auf Mehrspurigen, auf denen ein Wechsel in den Gegenverkehr möglich ist.

Alternativ oder kumulativ hierzu kennt entweder die Navigationsdatenbank eine Überholverbotszone oder das Kamerasystem erkennt ein Überholverbotsschild oder eine durchgezogene Linie, oder das Schild wird von einem Transponder übermittelt.

In einer weiteren Ausführung des Überholassistenten erkennt eine Seitensensorik, beispielsweise eine Kamera oder 24GHz bzw. 77GHz Radar oder ein Lidar-Scanner oder eine wie in der EP 1 159 636 Bl oder DE 101 38 531 A1 beschriebenen sog. TOF (Time of Flight) Kamera, die Position des zu überholenden Fahrzeugs, insbesondere relativ zum Ego, und gibt beispielsweise eine Meldung, wenn das Ego-Fahrzeug den Vorgang inklusive Sicherheitsabstand abgeschlossen hat.

In einer weiteren Ausführung des Überholassistenten erkennt die Umfeldsensorik entgegenkommenden Verkehr und generiert eine Warnung, wenn der Überholvorgang kritisch wird. Schließlich erkennt die Umfeldsensorik des Überholassistenten andere Hindernisse wie Tiere oder Fußgänger auf der Überholspur und generiert eine Warnung, wenn der Überholvorgang kritisch wird.

Der auf dem erfindungsgemäßen Assistenzsystem aufsetzende elektronische Überholassistent arbeitet gleichermaßen vorteilhaft bei Tag wie bei Nacht, wobei im letztgenannten Szenario sicherheitsrelevante Vorteile verstärkt auszumachen sind.

## Patentansprüche

1. Überholassistent für Kraftfahrzeuge, umfassend wenigstens eine Steuereinheit, welche bei einer durch die Steuereinheit erkannter Vorgabe des Fahrzeugführers zumindest je ein Datum
- eines Navigationssystems;
- einer Fahrumgebungserfassung
- einer Erfassungsvorrichtung für die aktuelle Fahrzeugdynamik und/oder der Vorgaben des Fahrzeugführers, miteinander verknüpft,
**dadurch gekennzeichnet, dass**
bei Überfahren der Mittellinie oder Setzen des Blinkers durch einen Fahrer eine Warnung ausgegeben wird, wenn der Streckenabschnitt laut Daten des Navigationssystems für einen Überholvorgang nicht geeignet ist.

2. Überholassistent nach Anspruch 1, **gekennzeichnet durch** Vorgaben des Fahrzeugführers wie: das eingegebene Ziel in einem Navigationssystem; der gewählte Gang des Getriebes; die Gaspedalstellung; die Stellung der übrigen Pedale; der eingeschlagene Lenkwinkel; die gesetzte oder nicht gesetzte Blinkerstellung; die Lichteinstellungen und/oder die Einstellungen des Cruise Controls (CC) oder des ACC.

3. Überholassistent nach Anspruch 1 oder 2, **gekennzeichnet durch** Daten des Navigationssystems wie: der globale Verlauf der vor dem Fahrzeug liegenden Fahrbahn; dem Typ der Fahrbahn wie Autobahn oder Landstrasse; der einer Fahrbahnbegrenzung; der Zahl der Fahrspuren; Brücken; Tunnel und/oder Verkehrszeichen.

4. Überholassistent nach einem der vorherigen Ansprüche, **gekennzeichnet durch** Daten der Fahrumgebungserfassung wie: den lokalen Verlauf der vor dem Fahrzeug liegenden Fahrbahn; die eigenen Fahrspur; die Krümmung der Fahrbahn; den Typ der Fahrbahnmarkierung; weitere Verkehrsteilnehmer nebst deren relative Positionen, Geschwindigkeiten und/oder Beschleunigungen in Bezug zum eigenen Fahrzeug; Randbebauungen wie Leitplanken, Verkehrszeichen, Tunnel, Abbiegepfeile, Zebrastreifen, Parkbuchten; die Position des eigenen Fahrzeugs auf der Fahrspur, den Gierwinkel, die Gierwinkeländerung, den Nickwinkel, die Nickwinkeländerung, den Rollwinkel und die Rollwinkeländerung des Fahrzeugs relativ zur Fahrspur bzw. zur Fahrspurebene.

5. Überholassistent nach Anspruch 4, **gekennzeichnet durch** Umfeldsensoren zur Generierung der Daten der Fahrumgebungserfassung wie den Frontbereich, ggf. auch die Seitenbereiche und die Rückfront des Kraftfahrzeuges erfassende Kamerasysteme; ACC Radar; 24 GHz- oder 77 GHz-Radarsensoren, LIDAR-Sensoren und/oder Ultraschallsensoren.

6. Überholassistent nach einem der vorherigen Ansprüche, **gekennzeichnet durch** Daten der aktuellen Fahrzeugdynamik wie: Raddrehzahl; Gierwinkel; Motordrehzahl und/oder Gang des Getriebes.

7. Überholassistent nach Anspruch 6, **gekennzeichnet durch** Erfassungsvorrichtungen der aktuellen Fahrzeugdynamik wie Raddrehzahlsensoren; Gierwinkelsensoren und/oder Motorsteuerung.

8. Überholassistent nach einem der vorherigen Ansprüche, **dadurch gekennzeichnet, dass** die Warnung ein akustischer, visueller und/oder haptischer Warnhinweis ist.

9. Überholassistent nach einem der vorherigen Ansprüche, **dadurch gekennzeichnet, dass** die Steuereinheit anstelle der Ausgabe einer Warnung selbständig in definierte Systeme wie Bremsen, Lenkung, etc. des Kraftfahrzeuges eingreift.

10. Überholassistent nach einem der vorherigen Ansprüche,
**dadurch gekennzeichnet, dass**
die Geschwindigkeit des eigenen Fahrzeugs, sowie optional die von einer Umfeldsensorik erfasste Geschwindigkeit des zu überholenden Fahrzeugs berücksichtigt wird, um ggf. eine Warnung zu generieren.

11. Überholassistent nach einem der vorherigen Ansprüche,
**dadurch gekennzeichnet, dass**
dem Fahrer nach einer Warnung mitgeteilt wird, in welcher Entfernung der nächste geeignete Streckenabschnitt für ein Überholmanöver zu erwarten ist.

12. Überholassistent nach einem der vorherigen Ansprüche,
**dadurch gekennzeichnet, dass**
die Steuereinheit aufgrund der Navigationsdaten oder aufgrund der Erkennung von Gegenverkehr Kenntnis darüber hat, ob auf dem Streckenabschnitt mit Gegenverkehr zu rechnen ist und Warnungen nur auf einspurigen Fahrbahnen generiert werden oder auf Mehrspurigen, auf denen ein Wechsel in den Gegenverkehr möglich ist.

13. Überholassistent nach einem der vorherigen Ansprüche,
**dadurch gekennzeichnet, dass**
entweder die Navigationsdatenbank eine Überholverbotszone kennt oder das Kamerasystem ein Überholverbotsschild oder eine durchgezogene Linie erkennt oder das Überholverbotsschild von einem Transponder übermittelt wird.

14. Überholassistent nach einem der vorherigen Ansprüche,
**dadurch gekennzeichnet, dass**
eine Seitensensorik die Position eines zu überholenden Fahrzeugs erkennt und eine Meldung ausgegeben wird, wenn das Ego-Fahrzeug den Vorgang inklusive Sicherheitsabstand abgeschlossen hat.

15. Überholassistent nach einem der vorherigen Ansprüche,
**dadurch gekennzeichnet, dass**
die Umfeldsensorik entgegenkommenden Verkehr erkennt und eine Warnung generiert wird, wenn der Überholvorgang kritisch wird.

16. Überholassistent nach einem der vorherigen Ansprüche,
**dadurch gekennzeichnet, dass**
die Umfeldsensorik andere Hindernisse wie Tiere oder Fußgänger auf der Überholspur erkennt und eine Warnung generiert wird, wenn der Überholvorgang kritisch wird.

## Claims

1. Overtaking assistant for motor vehicles, comprising at least one control unit which in the case of a specification of a driver of a motor vehicle detected by the control unit links together at least one item of data each
- of a navigation system,
- of a recording of the driving environment,
- of a detector for the current vehicle dynamics and/or the specifications of a driver of a motor vehicle,
**characterised in that**
when a driver crosses the centre line or indicates, a warning is emitted if, according to data from the navigation system, the section of road is not suitable for an overtaking manoeuvre.

2. Overtaking assistant according to claim 1, **characterised by** specifications of the driver of a motor vehicle such as: a destination entered into a navigation system; the gear selected; the position of an accelerator pedal; the position of other pedals; an angle at which a steering wheel is turned; the set or non-set indicator position; light settings and/or the settings of the cruise control (CC) or ACC.

3. Overtaking assistant according to claim 1 or 2, **characterised by** data from the navigation system such as: the global course of the roadway lying ahead of the motor vehicle; the type of roadway such as a motorway or country road; a road barrier; the number of traffic lanes; bridges; tunnels and/or traffic signs.

4. Overtaking assistant according to any one of the preceding claims, **characterised by** data from the driving environment recording such as: the local course of the roadway lying ahead of the motor vehicle; the traffic lane currently travelled by the motor vehicle; the curve of the roadway; the type of road surface markings; additional road users with relative positions, speeds, and/or accelerations thereof relative to the motor vehicle in question; peripheral structures such as crash barriers, traffic signs, tunnels, arrows showing a curve in the road, zebra crossings, parking bays; the position of the motor vehicle in question in the traffic lane, the yaw angle, a change in the yaw angle, the pitch angle, a change in the pitch angle, the roll angle and a change in the roll angle of the vehicle relative to the traffic lane or a level of a surface of the traffic lane.

5. Overtaking assistant according to claim 4, **characterised by** environment sensors for generating driving environment recording data such as camera systems recording the front area of the vehicle, optionally the side areas of the vehicle and the rear of the motor vehicle; ACC radars; 24 GHz or 77 GHz radar sensors, LIDAR sensors and/or ultrasound sensors.

6. Overtaking assistant according to any one of the preceding claims, **characterised by** data from the current vehicle dynamics such as: wheel rotational speed; yaw angle; engine speed and/or currently selected gear.

7. Overtaking assistant according to claim 6, **characterised by** detectors of the current vehicle dynamics such as wheel rotational speed sensors; yaw angle sensors and/or engine controller.

8. Overtaking assistant according to any one of the preceding claims, **characterised in that** the warning is an acoustic, a visual and/or a haptic warning signal.

9. Overtaking assistant according to any one of the preceding claims, **characterised in that**, instead of emitting a warning, the control unit intervenes independently in defined systems such as braking or steering, etc. of the motor vehicle.

10. Overtaking assistant according to any one of the preceding claims, **characterised in that** the speed of the vehicle and optionally the speed of the vehicle to be overtaken, which is detected by an environment sensor system, is taken into account in order to optionally generate a warning.

11. Overtaking assistant according to any one of the preceding claims, **characterised in that** following a warning the driver is informed at what distance the next section of road suitable for an overtaking manoeuvre may be expected.

12. Overtaking assistant according to any one of the preceding claims, **characterised in that** on the basis of navigation data or detection of oncoming traffic, the control unit knows whether oncoming traffic is to be expected on the section of road and warnings are only generated on single-lane roadways or on multi-lane roadways on which a change in oncoming traffic is possible.

13. Overtaking assistant according to any one of the preceding claims, **characterised in that** either the navigation database is aware of a no-overtaking zone or the camera system detects a no-overtaking sign or a solid line or the no-overtaking sign is transmitted by a transponder.

14. Overtaking assistant according to any one of the preceding claims, **characterised in that** a side sensor system detects the position of a vehicle to be overtaken and a message is output if the ego vehicle has concluded the manoeuvre including safety distance.

15. Overtaking assistant according to any one of the preceding claims, **characterised in that** the environment sensor system detects oncoming traffic and a warning is generated if the overtaking manoeuvre becomes critical.

16. Overtaking assistant according to any one of the preceding claims, **characterised in that** the environment sensor system detects other obstacles such as animals or pedestrians on the overtaking lane and a warning is generated if the overtaking manoeuvre is critical.

## Revendications

1. Assistant de dépassement pour véhicules automobiles, comprenant au moins une unité de commande qui, en cas d'une spécification du conducteur de véhicule détectée par l'unité de commande, associe à chaque fois au moins une donnée
- d'un système de navigation,
- d'une détection d'environnement de conduite,
- d'un dispositif de détection pour la dynamique actuelle du véhicule et/ou des spécifications du conducteur de véhicule, les unes avec les autres,
**caractérisé en ce que**,
lorsque la ligne médiane est franchie ou que le clignotant est mis par un conducteur, un avertissement est délivré lorsque la partie de tronçon ne convient pas pour l'opération de dépassement d'après les données du système de navigation.

2. Assistant de dépassement selon la revendication 1, **caractérisé par** des spécifications du conducteur de véhicule telles que: la destination entrée dans le système de navigation, la vitesse sélectionnée de la boîte de vitesses, la position de la pédale d'accélérateur, la position des autres pédales, l'angle de braquage, la position du clignotant mis ou non mis, les réglages de lumière et/ou les réglages du régulateur de vitesse (CC) ou du régulateur de distance de sécurité (ACC).

3. Assistant de dépassement selon la revendication 1 ou 2, **caractérisé par** des données du système de navigation telles que le tracé global de la chaussée située devant le véhicule, le type de chaussée tel qu'autoroute ou route secondaire ; la/une délimitation de chaussée ; le nombre des voies; ponts ; tunnels et/ou panneaux de signalisation.

4. Assistant de dépassement selon l'une quelconque des revendications précédentes, **caractérisé par** des données de l'enregistrement d'environnement de conduite telles que le tracé local de la chaussée située devant le véhicule ; la voie propre ; la courbure de la chaussée ; le type de marquage de chaussée ; autres usagers de la circulation avec leurs positions relatives, leurs vitesses et/ou leurs accélérations par rapport au propre véhicule, l'infrastructure routière et la signalisation telles que rails de sécurité, panneaux de signalisation, tunnels, flèches pour tourner, passages zébrés pour piétons, aires de stationnement en bordure de route ; la position du propre véhicule sur la voie, l'angle de lacet, la variation de l'angle de lacet, l'angle de tangage, la variation de l'angle de tangage, l'angle de roulis et la variation de l'angle de roulis du véhicule par rapport à la voie ou au plan de la voie.

5. Assistant de dépassement selon la revendication 4, **caractérisé par** des capteurs d'environnement pour générer des données d'enregistrement d'environnement de conduite, telles que des systèmes de caméra détectant la zone avant, éventuellement également les zones latérales et l'arrière du véhicule ; radar ACC ; capteurs radar 24 GHz ou 77 GHz, capteurs LIDAR et/ou capteurs à ultrasons.

6. Assistant de dépassement selon l'une quelconque des revendications précédentes, **caractérisé par** des données de la dynamique actuelle du véhicule, telles que: régime de roue ; angle de lacet ; régime du moteur et/ou vitesse de la boîte de vitesses.

7. Assistant de dépassement selon la revendication 6, **caractérisé par** les dispositifs de détection de la dynamique actuelle du véhicule, tels que capteurs de régime de roue, capteurs d'angle de lacet et/ou commande du moteur.

8. Assistant de dépassement selon l'une quelconque des revendications précédentes, **caractérisé en ce que** l'avertissement est une indication d'avertissement acoustique, visuelle et/ou tactile.

9. Assistant de dépassement selon l'une quelconque des revendications précédentes, **caractérisé en ce que**, au lieu de délivrer un avertissement, l'unité de commande intervient automatiquement sur des systèmes définis tels que freins, direction, etc., du véhicule.

10. Assistant de dépassement selon l'une quelconque des revendications précédentes, **caractérisé en ce que** la vitesse du véhicule propre, et, en option, la vitesse détectée par un capteur d'environnement du véhicule à dépasser, sont prises en compte afin de générer éventuellement un avertissement.

11. Assistant de dépassement selon l'une quelconque des revendications précédentes, **caractérisé en ce que**,
après un avertissement, on signale au conducteur à quelle distance se trouve la prochaine partie de tronçon appropriée pour effectuer une manoeuvre de dépassement.

12. Assistant de dépassement selon l'une quelconque des revendications précédentes, **caractérisé en ce que**
l'unité de commande est informée, sur la base des données de navigation ou sur la base de la détection de la circulation en sens opposé, si l'on doit s'attendre à une circulation en sens inverse sur la partie de tronçon et les avertissements sont générés uniquement sur des chaussées à voie unique ou sur des chaussées à voies multiples sur lesquelles un passage sur la circulation en sens opposé est possible.

13. Assistant de dépassement selon l'une quelconque des revendications précédentes, **caractérisé en ce que**
soit la banque de données de navigation connaît une zone d'interdiction de dépassement, soit le système de caméra détecte un panneau d'interdiction de dépassement ou une ligne continue, soit le panneau d'interdiction de dépassement est transmis par un transpondeur.

14. Assistant de dépassement selon l'une quelconque des revendications précédentes, **caractérisé en ce que**
un capteur latéral détecte la position d'un véhicule à dépasser et un message est délivré, lorsque le véhicule propre a terminé l'opération avec la distance de sécurité.

15. Assistant de dépassement selon l'une quelconque des revendications précédentes, **caractérisé en ce que**
le capteur d'environnement détecte la circulation arrivant en sens inverse et un avertissement est généré, lorsque l'opération de dépassement devient critique.

16. Assistant de dépassement selon l'une quelconque des revendications précédentes, **caractérisé en ce que**
le capteur d'environnement détecte d'autres obstacles, tels qu'animaux ou piétons sur la voie de dépassement et un avertissement est généré lorsque l'opération de dépassement devient critique.
